# EUROPEAN PATENT APPLICATION

(11) **EP 2 862 433 A1**
(43) Date of publication of application: **22.04.2015**
(21) Application number: 14188793.5
(22) Date of filing: 14.10.2014
(51) Int. Cl.: A01D 45/02

(54) **Row divider for a corn header of a combine harvester**

(30) Priority: 15.10.2013 US 201314053671
(71) Applicant: CNH Industrial Belgium nv, 8210 Zedelgem (BE)
(72) Inventor: Priepke, Edward H., Lancaster, PA Pennsylvania 17601 (US)
(74) Representative: CNH Industrial IP Department

(57) **Abstract**

An improved row divider (28) for a corn head assembly of a combine harvester (1) is disclosed. The row divider (28) includes opposing non-vertical sidewalls (40) that taper inwardly to define a narrow bottom. The non-vertical sidewalls (40) may be planar, concave or convex. The sloping surfaces of the sidewalls (40) result in less severe bending and shearing of corn stalks (211) that are misaligned with respect to the row divider (28) as the combine harvester (1) traverses a corn field, thereby increasing crop yield.

## Description

### BACKGROUND

The subject application relates generally to a corn header for use with combine harvesters. In particular, the subject application relates to a non-row-sensitive row divider for corn headers.

Combines that harvest corn are provided with row dividers, also generally known as snouts, for directing rows of corn stalks to ear separation chambers including snapping rolls and stripping plates and then to an auger for conveying the harvested corn to a feederhouse of the combine. Harvested corn is then processed to the combine's inner chambers for downstream processing.

During harvesting operations, when a corn header is properly aligned with rows of corn stalk, a pair of row dividers straddles each row of corn stalk being harvested and the corn ears are directed to the snapping rolls and stripping plates and are stripped from their stalks generally without incident. However, as the combine traverses a corn field it is not uncommon for the row dividers and corn stalk rows to become misaligned. As used herein, a row of stalks is considered misaligned with a row divider when the row of stalks is not positioned substantially between a pair of adjacent row dividers or when the row of stalks is substantially inline with a sagittal plane of a row divider. When this occurs, the row dividers may not properly engage the corn stalks and the combine may not extract some or all of the corn from the stalks. This is due at least in part to the construction of conventional row dividers. Typical row dividers include vertical sidewall surfaces and/or large planar bottom ends which cause the row dividers to induce severe bending and possible shearing of the corn stalks that are misaligned with respect to the row dividers. Consequently, a certain portion of the available ears of corn do not undergo stripping from the stalks and are left in the field which results in a less than optimal crop harvest.

Thus, there is still a need for a combine harvester that is capable of preventing crop loss at the corn header location. Such a need is satisfied by the subject row divider for a corn header of a combine harvester.

### BRIEF SUMMARY

In accordance with a first aspect, the subject application provides a row divider for corn headers adapted for use with a combine harvester. The row divider is specifically contoured to address the problems associated with conventional row dividers which may deflect stalks away from the header's stripping means when not properly aligned between adjacent rows of stalk. By engendering specific contours for the overall shape of the row divider, such row dividers do less harm to the corn stalks that are misaligned with the row dividers as the combine traverses a field of corn. In particular, the row dividers have beveled or non-vertical sidewalls which operate to effectively guide misaligned stalks to the corn header's stripping means by urging the stalks to moderately bend during harvesting.

In accordance with a second aspect, the subject application mitigates an occurrence wherein the corn stalk is pushed beneath the snapping rolls of agricultural equipment that hosts the row divider. To this end, the row divider of the subject application can facilitate a movement of the corn stalk above the snapping rolls for an efficient corn harvesting operation.

In accordance with a third aspect, the subject application provides for a row divider operable to effectively manipulate stalks which are misaligned with respect to the row divider during harvesting by a combine harvester. The row divider includes an aft portion adapted for connection to a corn header and a fore portion. The fore portion tapers in size from the aft portion. An upper surface extends across the aft and fore portions. The row divider further includes a pair of opposing non-vertical sidewalls depending from the upper surface and tapering inwardly defining a narrow bottom end. The shape of the row divider sidewalls reduces severe bending and shearing of stalks which are misaligned with respect to the row divider during harvesting by the combine harvester. It will be understood that severe bending includes any circumstance where a corn stalk is bent to such a degree and/or orientation that it fails to be engaged by the stripping plates and snapping rolls, including without limitation any forward or lateral bending of such magnitude that causes the stalk to avoid the stripping plates and snapping rolls.

In accordance with a fourth aspect, the subject application provides a row divider for a corn header for addressing the problems of conventional row dividers by engendering a row divider configured with a fore portion having a substantially hull-shaped cross-section and a non-planar bottom end for non-destructively engaging corn stalks as the combine traverses a corn row that is misaligned with the row divider.

In accordance with a fifth aspect, the subject application provides for a row divider operable to effectively manipulate stalks which are misaligned with respect to the row divider during harvesting by a combine harvester. The row divider includes a bulbous aft portion connectable to a corn header and a fore portion tapering in size from the aft portion. An upper surface extends across the aft and fore portions. The fore portion has a pair of opposing sidewalls depending from the upper surface and tapering inwardly defining a narrow bottom end having an overall width less than an overall width of the row divider. The shape of the row divider advantageously reduces severe bending and shearing of stalks which are misaligned with respect to the row divider during harvesting by the combine harvester.

In accordance with a sixth aspect, the subject application provides for a corn header adapted for use with a combine harvester. The corn header includes a plurality of row units each of which includes snapping rolls and stripping plates having an aperture for receiving stalk, gathering chains for conveying stalk toward the snapping rolls and stripping plates, and a plurality of row dividers. Each row divider includes an aft portion adapted for connection to at least one of a plurality of row units of the corn header, a fore portion that tapers in size from the aft portion, an upper surface extending across the aft and fore portions, and a pair of opposing non-vertical sidewalls depending from the upper surface and tapering inwardly defining a narrow bottom end. The fore portion extends forward of the snapping rolls and stripping plates and above a forward most end of the row unit. So constructed and arranged, the non-vertical sidewalls of the row divider provide shielding for the leading regions of the gathering chains of the row units while inducing non-destructive bending of corn stalks that are gathered by the row unit.

Advantages of row dividers constructed according to the subject application include less damage to misaligned corn stalks, less product being left in the field, less trash (stalk residue) entering the combine, and less plugging of the header row units, and improved feeding of corn stalks to the header's stripping means. Consequently, harvest yield and overall productivity is improved.

### BRIEF DESCRIPTION OF THE SEVERAL VIEWS OF THE DRAWINGS

The foregoing summary, as well as the following detailed description of several aspects of the subject application, will be better understood when read in conjunction with the appended drawings. For the purpose of illustrating the subject application there are shown in the drawings several aspects, but it should be understood that the subject application is not limited to the precise arrangements and instrumentalities shown.

In the drawings:
FIG. 1 is a perspective view of an agricultural combine including a corn header with row dividers according to the subject application;
FIG. 2 is a top perspective view of a row divider of the corn header of FIG. 1;
FIG. 3 is a side elevation view of the row divider of FIG. 1;
FIG. 4 is a front elevation view of the row divider of FIG. 1;
FIG. 5 is a front elevation view of a pair of row dividers according to the prior art shown engaging a corn stalk which is misaligned with respect to the row dividers;
FIG. 6 is a side elevation view of a fore portion of a row divider according to another aspect of the subject application;
FIG. 7 is a transverse cross-sectional view of the row divider of FIG. 6 taken along line A-A thereof;
FIG. 8 is a front elevation view of a pair of row dividers as shown in FIGS. 6 and 7 engaging a corn stalk which is misaligned with respect to the dividers; and
FIG. 9 is a side elevation view of a row divider according to the subject application shown attached to corn header.

### DETAILED DESCRIPTION

Reference will now be made in detail to the various aspects of the subject application illustrated in the accompanying drawings. Wherever possible, the same or like reference numbers will be used throughout the drawings to refer to the same or like features. It should be noted that the drawings are in simplified form and are not drawn to precise scale. In reference to the disclosure herein, for purposes of convenience and clarity only, directional terms such as top, bottom, left, right, above, below and diagonal, are used with respect to the accompanying drawings. Such directional terms used in conjunction with the following description of the drawings should not be construed to limit the scope of the subject application in any manner not explicitly set forth. Additionally, the term "a," as used in the specification, means "at least one." The terminology includes the words above specifically mentioned, derivatives thereof, and words of similar import.

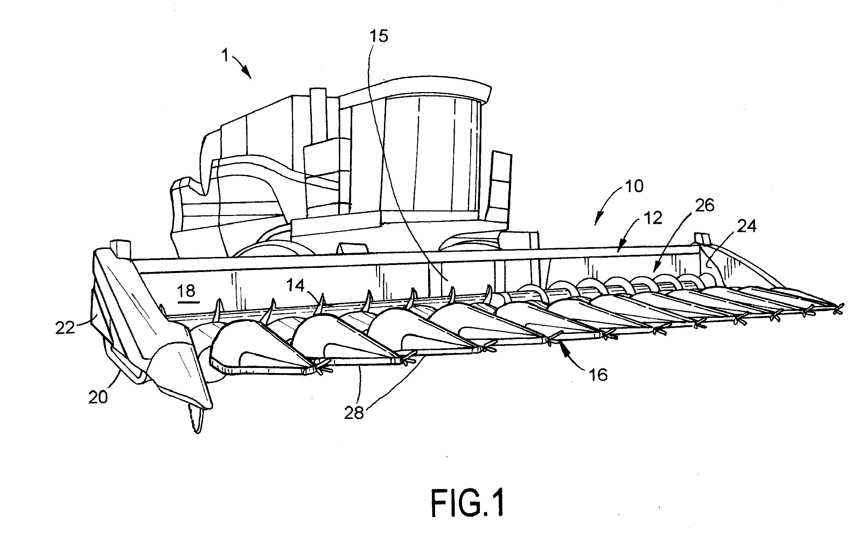

Referring now to the drawings, wherein aspects of the subject application are shown, FIG. 1 illustrates a corn head assembly (or corn header) 10 as applied to an agricultural combine 1. The corn head assembly 10 is an improvement to current conventional corn head assemblies of agricultural combines by incorporating a row divider to prevent or inhibit grain loss at an initial point of contact between the corn head assembly and crop stalks. The corn head assembly 10 is shown to be operatively connected to the agricultural combine 1 for harvesting corn and feeding the corn to a feederhouse which transports the harvested corn for downstream processing within the combine. Such feederhouses and harvesting structures and operations are known in the art and a further detailed description of their structure, function and operation is not necessary for a complete understanding of the subject application.

In a first aspect, the subject application provides a corn head assembly 10 for a combine harvester 1 having improved row dividers for preventing crop loss without inhibiting crop flow. The corn head assembly 10 includes a frame 12 for mounting to a forward end of the combine harvester 1, a conveyor 14 (such as an auger) extending lengthwise across the frame 12 for conveying crop material to a combine feeding location or feederhouse 15, and a plurality of row units 16 extending forwardly from the frame 12. Such row units 16 are known in the art and a further detailed description of their structure, function and operation is not necessary for a complete understanding of the subject application. However, typical row units applicable to the subject application are disclosed in U.S. Patent Nos. 8,286,410, 7,913,480, 7,874,134 and 7,373,767, the entire disclosures of which are incorporated by reference herein.

The frame 12 is configured as a substantially rectangular frame, as shown. However, the frame 12 may be configured as any shape suitable for the foregoing intended use. The frame 12 includes a rear wall 18, a bottom wall 20 and a pair of side walls 22, 24. As shown in FIG. 1, the frame 12 can be connected to a forward end of the combine harvester 1. Alternatively, the frame 12 can be connected to any device that has use for a corn head assembly 10. The frame 12 further includes a channel 26 formed partially by the bottom wall 20. The conveyor 14 conveys harvested corn along the channel 26 to the combine feeding location 15 located adjacent a midpoint of the channel 26. In operation, crop material is stripped from the stalks and then travels along the channel 26.

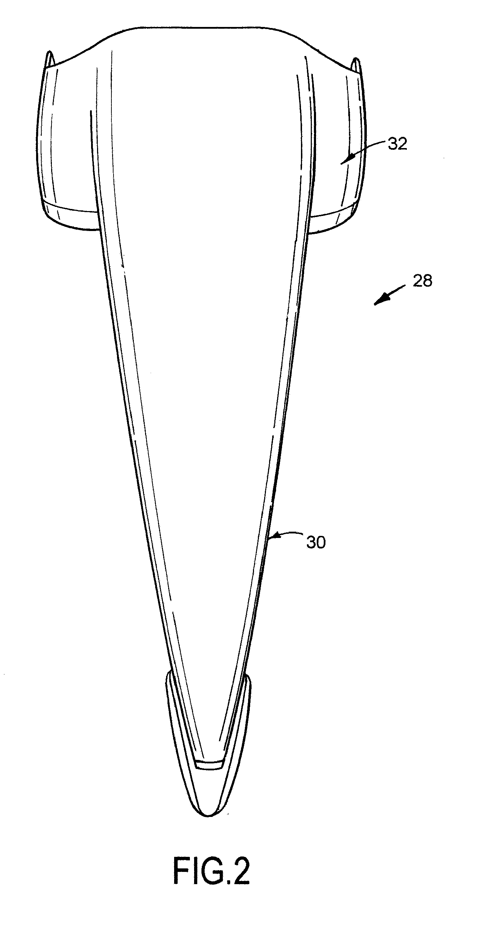

Referring to FIGS. 1 and 2, each of the plurality of row units 16 includes a row divider 28. The row divider 28 extends forwardly from the frame 12 and is connected to extend across a pair of adjacent row units 16. Owing to the specific contours of the row divider, during harvesting operations it directs a row of corn stalk towards snapping rolls and stripping plates situated between adjacent row dividers. The snapping rolls and stripping plates have an aperture for receiving corn stalks and, as is known, the snapping rolls pull the stalk downwardly snapping the ear when it strikes the stripping plates. The snapping rolls desirably pull most of the trash down and out of the header.

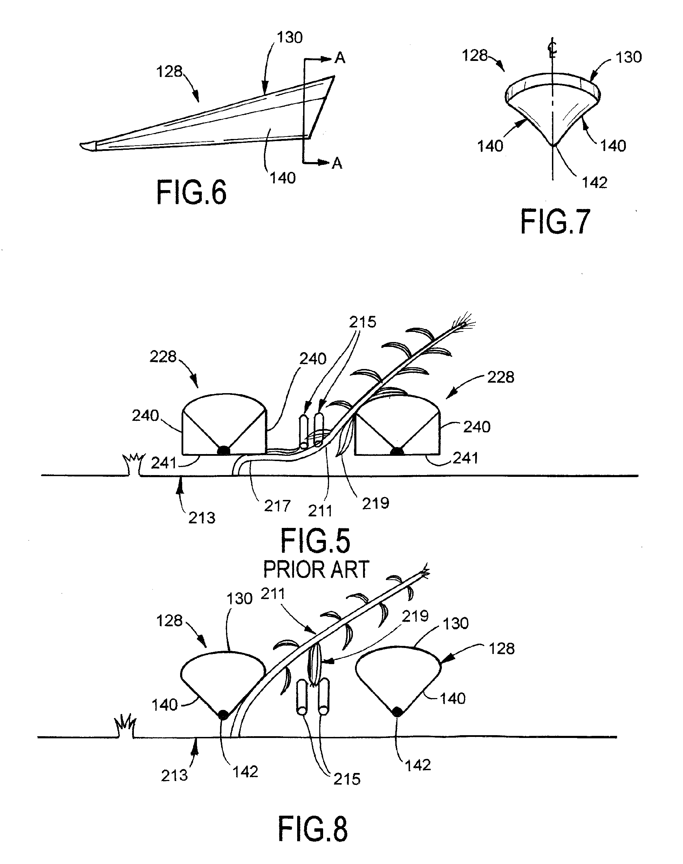

Referring to FIG. 5, there is shown a front view of a pair of corn row dividers 228 of conventional construction engaging a corn stalk 211 extending above a ground surface 213. The corn stalk 211 is misaligned with respect to the snapping rolls and stripping plates 215 which reside between a pair of adjacent row dividers. As a consequence of this misalignment, corn stalk 211 is shown being struck by the right divider which causes the stalk to be sharply bent at location 217. This harsh bending of the stalk, which could result in shearing of the stalk, may cause one or more stalks and corn ears 219 from engaging the snapping rolls and stripping plates 215 and being harvested by the combine. The result is an undesirable waste of crop that remains on the stalk regardless of whether the stalk is merely severely bent or is sheared off by the divider 228. The reason that conventional row dividers 228 inflict harmful bending or shearing of the corn stalk 211 lies in the configuration of the row dividers themselves. More specifically, conventional row dividers possess vertical sidewalls 240 and/or large flat bottom ends 241 which present abrupt corners and other surfaces that are not conducive to gentle manipulation of corn stalks as the combine harvester traverses a corn field in a misaligned manner.

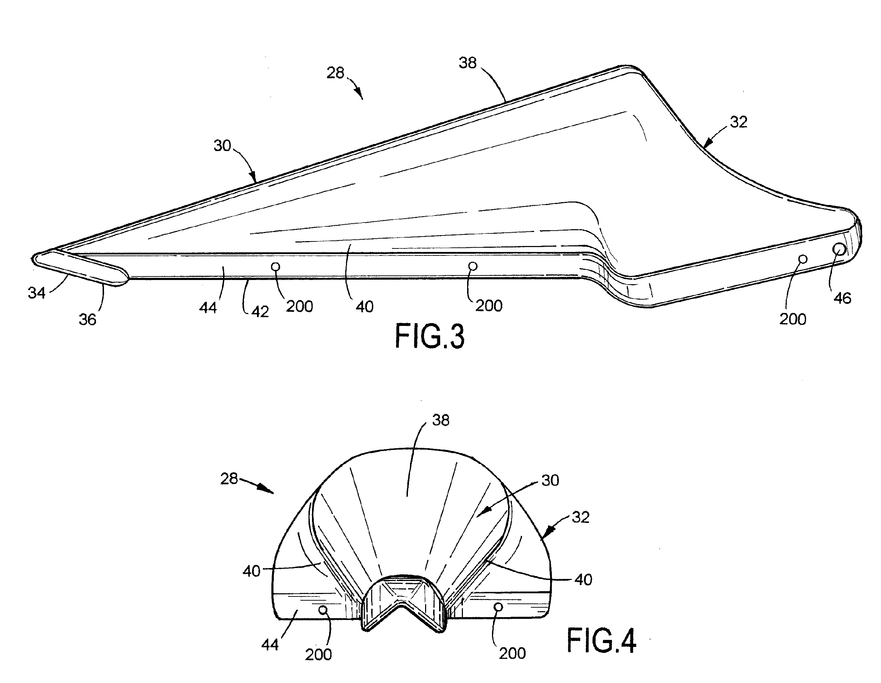

Turning to FIGS. 3 and 4, there are depicted the fore portion of row divider 28 according to an aspect of the subject application showing on an enlarged scale the contours thereof. Each row divider 28 includes a fore portion 30 and an aft portion 32. The aft portion is adopted for connection to the corn header. The row divider 28 tapers in size from the aft portion extending forwardly and terminates at a tip or point 34. More specifically, the fore portion tapers in size from the aft portion. The aft portion is generally or substantially bulbous in shape and/or configuration and connects to the header 10 at pivot openings 46 (one of which is shown in FIG. 3). The aft portion 32 is also configured to extend width wise from one row unit to another adjacent row unit.

The row divider 28 is formed as a unitary shell. Specifically, the fore and aft portions define a shell of unitary construction. However, the row divider can optionally be configured and constructed from separate components that may be joined by suitable fastening mechanisms.

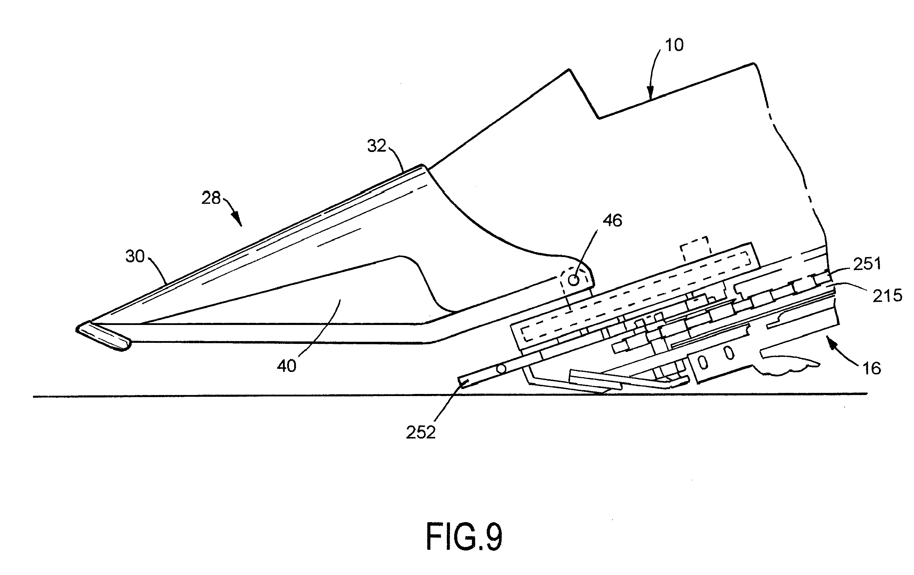

FIG. 9 reveals a further aspect of the subject application, specifically the positioning of the fore portion 30 of the row divider 28 relative to the structural components of row unit 16 of the corn header. As seen in FIG. 9, the aft portion 32 of the row divider 28 is pivotably connected to the header 10 (and in particular connected to at least one of the plurality of row units) at pivots 46 while the fore portion 30 lies entirely forward of the row unit, including snapping rolls and stripping plates 215, gathering chains 251 and tine wheels 252. The fore portion 30 is also positioned to lie completely above a forward most end of the row unit, such as the forward most end of the snapping rolls, stripping plates, gathering chains and tine wheels.

As is known, the snapping rolls and stripping plates 215 have an elongate aperture for receiving stalk and gathering chains 251 extend adjacent each side of the snapping rolls and stripping plates for conveying stalk toward the snapping rolls and stripping plates. A tine wheel 252 is also positioned on each side of the row unit. The tine wheels 252 gather and deliver the stalk to the gathering chains 251 which in turn deliver the stalk to the snapping rolls and stripping plates and an unillustrated conveyor similar to conveyor 14 of FIG. 1. According to the subject application, the non-vertical sidewalls 40 of the row divider 28 provide shielding for the leading regions of the tine wheels 252 and gathering chains 251 while inducing non-destructive bending of corn stalks that are gathered by the row unit.

In another aspect, the fore portion 30 is positioned to lie completely above a forward most end of the tine wheels 252 and forward of the row unit except for the leading edges of the tine wheels 252. The leading edges of the tine wheels 252 is positioned to extend slightly forward of an anterior surface of the bulbous aft portion 32. In doing so, the fore portion 30 can advantageously manipulate stalk engaging the fore portion while the tine wheels direct the stalk to the stripping plate and snapping rolls before the stalk engages the aft portion 32. Alternatively, the leading edges of the tine wheels can be positioned in line with the anterior surface of the aft portion 32 or slightly rearward thereof so long as the tine wheels can sufficiently direct stalk to the stripping plates prior to the aft portion 32 sheering the stalk or redirecting the stalk in an adverse manner.

Referring back to FIG. 3, the row divider 28 also includes a reinforcement member 36. The reinforcement member 36 ensures that the shape of the row divider is maintained during operation.

The row divider 28 also includes an upper surface 38 extending across the fore and aft portions 30, 32 and a pair of opposing sidewalls 40 which taper inwardly to define a narrow bottom end 42. The opposing sidewalls in one aspect are non-vertical sidewalls depending from the upper surface and tapering inwardly defining a narrow bottom end. The overall width is less than the overall width of the row divider. At least one of the sidewalls is configured to be substantially planar, concave or convex and extends substantially the entire length of the fore portion 30. The outside surface of the sidewalls 40 each define an acute angle relative to a horizontal ground surface, such as from about 30 to 60 degrees.

As seen in FIGS. 3 and 4, row divider 28 includes a rim 44 which extends along the perimeter of the bottom end of the row divider. Attached to the rim 44 is the reinforcement member 36 which extends along the rim. The rim and the reinforcement member may be joined by suitable fasteners 200 such as screws, bolts, rivets, or the like. Further, as noted above, the aft portion 32 includes openings 46 (one of which is shown in FIG. 3) defining pivots for pivotally connecting the aft portion to a corn header whereby the divider may be pivoted upwardly to follow the ground contour as well as to facilitate both transport of the corn header, and maintenance of the row divider and the corn gathering drive mechanisms it covers.

Referring to FIG. 7, in accordance with another aspect of the subject application there is shown a fore portion 130 of a row divider 128 configured with a substantially hull-shaped cross-section. The cross-section of the fore portion 130 transverse to a longitudinal axis of the row divider is substantially hull-shaped. As described in greater detail with regard to FIGS. 6-8, it is this hull shape which enables the row dividers 128 to more effectively manipulate corn stalks during harvesting than their conventional counterparts.

The row divider 128 is configured with a narrow bottom end 142 having a non-planar geometry in order to further the productive manipulation of a corn stalk, as described below. The non-planar bottom geometry includes an apex defined by the sidewalls of the row divider.

FIG. 8 illustrates the manner by which the row divider 128 effectively and productively manipulates a misaligned corn stalk 211. As seen in that figure, and in contrast with FIG. 5, the non-vertical walls 140 and the non-planar narrow bottom end 142 of the row divider 128 define a generally hull-shaped contour as opposed to the right angled or generally squared lower shape common to conventional row dividers. That is, the row divider presents sloping surfaces that reduce both sharp bending and the likelihood of shearing of a corn stalk. More particularly, FIG. 8 shows that when the row divider contacts a misaligned corn stalk 211, the impinging non-vertical sidewall 140 of row divider 128 urges the corn stalk into a less substantial bend than does a sharp corner that is produced by a vertical sidewall. According to either aspect, the row dividers of the subject application are operable to effectively manipulate stalks which are misaligned with respect to the row divider during harvesting by a combine harvester because the shape of the row divider sidewalls reduces severe bending and shearing of stalks which are misaligned with respect to the row divider during harvesting by the combine harvester. The result is that fewer stalks 211 are sheared and less are bent to the point where their ears 219 cannot be effectively engaged by the snapping rolls and stripping plates 215. Additionally, less stalk residue enters the combine and less clogging occurs in the row units. Consequently, more corn is harvested and less machine maintenance is required relative to combine header assemblies which carry row dividers of conventional design.

It will be appreciated by those skilled in the art that changes could be made to the embodiments described above without departing from the broad inventive concept thereof. It is to be understood, therefore, that the subject application is not limited to the particular aspects disclosed, but it is intended to cover modifications within the spirit and scope of the subject application as defined by the appended claims.

## Claims

1. A row divider (28) for a corn header (10) adapted for use with a combine harvester (1), the row divider (28) being operable to effectively manipulate stalks (211) which are misaligned with respect to the row divider (28) during harvesting by the combine harvester (1), the row divider (28) comprising:
an aft portion (32) adapted for connection to a corn header (10);
a fore portion (30), wherein said fore portion (30) tapers in size from said aft portion (32);
an upper surface (38) extending across the aft (32) and fore (30) portions; and
a pair of opposing non-vertical sidewalls (40) depending from said upper surface (38) and tapering inwardly defining a narrow bottom end;
whereby the shape of the row divider (28) sidewalls (40) reduces substantial bending and shearing of stalks (211) which are misaligned with respect to the row divider (28) during harvesting by the combine harvester (1).

2. The row divider (28) of claim 1, wherein at least one of said sidewalls (40) is substantially planar, convex or concave.

3. The row divider (28) of claim 1, wherein said sidewalls (40) extend substantially the entire length of said fore portion (30).

4. The row divider (28) of claim 1, wherein a cross-section of said fore portion (30) transverse to a longitudinal axis of the row divider (28) is substantially hull shaped.

5. The row divider (28) of claim 1, wherein said bottom end includes a non-planar bottom geometry.

6. The row divider (28) of claim 1, wherein said aft portion (32) is substantially bulbous in configuration.

7. The row divider (28) of claim 1, wherein each of said sidewalls (40) define an angle relative to a horizontal ground surface from about 30 to 60 degrees.

8. The row divider (28) of claim 1, wherein each of said sidewalls (40) has an outside surface that defines an acute angle relative to a horizontal ground surface.

9. The row divider (28) of claim 1, wherein said fore and aft portion (32)s define a shell of unitary construction.

10. The row divider (28) of claim 1, further comprising a reinforcement member for maintaining the shape of the row divider (28).

11. The row divider (28) of claim 10, further comprising a rim extending along the perimeter of the bottom end and said reinforcement member extends along the rim.

12. A row divider (28) as claimed in any one of the claims 1 to 11, further comprising a bulbous aft portion (32) connectable to a corn header (10), and wherein the upper surface (38) has an overall width less than an overall width of the row divider (28).

13. A corn header (10) of a combine harvester (1) comprising:
a plurality of row units each including:
a stripping plate having an aperture for receiving stalk (211), and
a gathering chain extending adjacent the stripping plate for conveying stalk (211) toward the stripping plate; and
a row divider (28) as claimed in any one of the claims 1 to 12.

14. A corn header (10) as claimed in claim 13, wherein said fore portion (30) extends forward the stripping plate and above a forward most end of the row unit.
